# FASCICULE DE BREVET EUROPEEN

(11) **EP 2 078 660 B1**
(45) Date de publication et mention de la délivrance du brevet: **04.08.2010**
(21) Numéro de dépôt: 09150323.5
(22) Date de dépôt: 09.01.2009
(51) Int. Cl.: B62C 1/08

(54) **sulky**
Sulky
sulky

(30) Priorité: 10.01.2008 FR 0800141
(43) Date de publication de la demande: 15.07.2009
(73) Titulaire: Claude FLORES Bureau d'Etudes, 38150 Roussillon (FR)
(72) Inventeur: Flores, Claude, 38150 Roussillon (FR)
(74) Mandataire: Chevalier, Renaud Philippe

(56) Documents cités:
- FR-A- 2 525 536
- FR-A- 2 768 984
- US-A1- 2005 023 784

## Description

La présente invention se rapporte à un chariot d'attelage du type sulky.

Un tel chariot d'attelage comprend généralement un pont central présentant deux extrémités opposées prolongées chacune par un ensemble comportant un étrier et un brancard solidaires l'un de l'autre, ledit étrier étant conçu pour supporter une roue et ledit brancard étant destiné à être relié à un élément d'harnachement d'un animal. Un siège est fixé dans le pont central et permet au jockey de s'installer à bord dudit chariot d'attelage.

Un tel chariot d'attelage est couramment employé pour l'entraînement ou pour la course, mais présente cependant l'inconvénient lié au fait que la suspension du chariot d'attelage s'applique à une structure compacte comprenant le pont central, les deux étriers et les deux brancards. Par conséquent, cela signifie que l'une des deux roues n'est pas libre de s'adapter au relief du sol indépendamment de l'autre roue.

L'objet de la présente invention est de pallier en tout ou partie cet inconvénient, de façon simple et fiable. Pour cela, la présente invention consiste en un chariot d'attelage du type sulky comportant une structure comprenant deux ensembles reliés par un axe et se décomposant chacun en un étrier et en un brancard solidaires l'un de l'autre, ledit étrier étant conçu pour supporter une roue et ledit brancard étant destiné à être relié à un élément d'harnachement d'un animal, **caractérisé en ce que** les deux ensembles sont conçus de manière à être indépendants l'un de l'autre en rotation autour de l'axe.

Ainsi, chaque ensemble n'est plus tributaire de l'autre, et pourra donc se comporter différemment de l'autre en fonction des obstacles rencontrés, et/ou des mouvements de l'animal.

Il est bien évident que le fait de pouvoir mieux aborder les reliefs présentés par le sol rend le chariot d'attelage beaucoup plus stable, ce qui facilite la tâche du conducteur et lui confère un avantage considérable lors d'une course.

Selon un premier mode de réalisation préféré de l'invention, chacun des deux ensembles est monté oscillant autour de l'axe. Il en découle que l'axe peut demeurer fixe, et que chaque ensemble peut avoir un comportement totalement indépendant de l'autre ensemble, quelles que soient les sollicitations auxquelles il est soumis.

Selon un second mode de réalisation préféré de l'invention, un ensemble est monté oscillant autour de l'axe, et l'autre ensemble est solidaire de l'axe.

Préférentiellement, l'axe est réalisé sous la forme d'un tube. Il doit être bien compris que l'axe reliant les deux ensembles peut en variante être réalisé en matière plastique par exemple, le mouvement d'oscillation de chaque ensemble autour dudit axe étant alors obtenu par torsion élastique dudit axe sur lui-même.

Avantageusement, l'un des deux ensembles au moins comprend un manchon monté pivotant autour de l'axe.

Selon une première variante de réalisation préférée de l'invention, chacun des deux ensembles comprend un manchon distinct monté pivotant autour de l'axe. De préférence, ce manchon a sensiblement la forme d'un L.

Selon une seconde variante de réalisation préférée de l'invention, un ensemble comprend un manchon monté pivotant autour de l'axe, et l'autre ensemble est solidaire de l'axe. Par conséquent, en fonction des obstacles rencontrés et/ou des mouvements de l'animal, le manchon pourra pivoter autour de l'axe, et/ou ce dernier pourra être amené à pivoter dans le manchon.

Selon une caractéristique de l'invention, le manchon est équipé de bagues de maintien et de stabilisation.

Ainsi, un chariot d'attelage selon l'invention est particulièrement avantageux puisqu'il permet de mieux épouser les reliefs du sol, sans nécessiter pour autant l'incorporation d'un dispositif complexe de suspension qui pourrait être rédhibitoire d'un point de vue masse, encombrement ou encore coût d'installation.

La mise en oeuvre de l'invention sera mieux comprise à l'aide de la description détaillée qui est exposée ci-dessous en regard du dessin annexé dans lequel :
La figure 1 est une vue schématique en perspective d'un chariot d'attelage selon le premier mode de réalisation préféré de l'invention ;
La figure 2 est une vue en coupe selon la ligne II-II de la figure 1 ;
La figure 3 est une vue schématique de côté d'un chariot d'attelage selon le second mode de réalisation préféré de l'invention ;
La figure 4 est une vue en coupe selon la ligne IV-IV de la figure 2.

Dans la description détaillée qui va suivre des figures définies ci-dessus, les mêmes éléments ou les éléments remplissant des fonctions identiques pourront conserver les mêmes références de manière à simplifier la compréhension de l'invention.

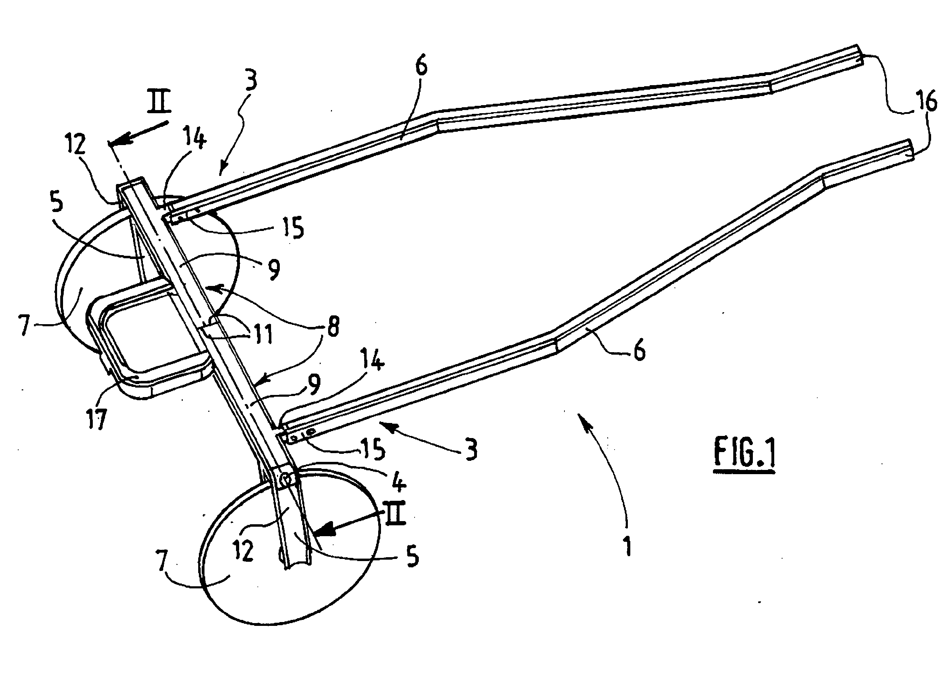

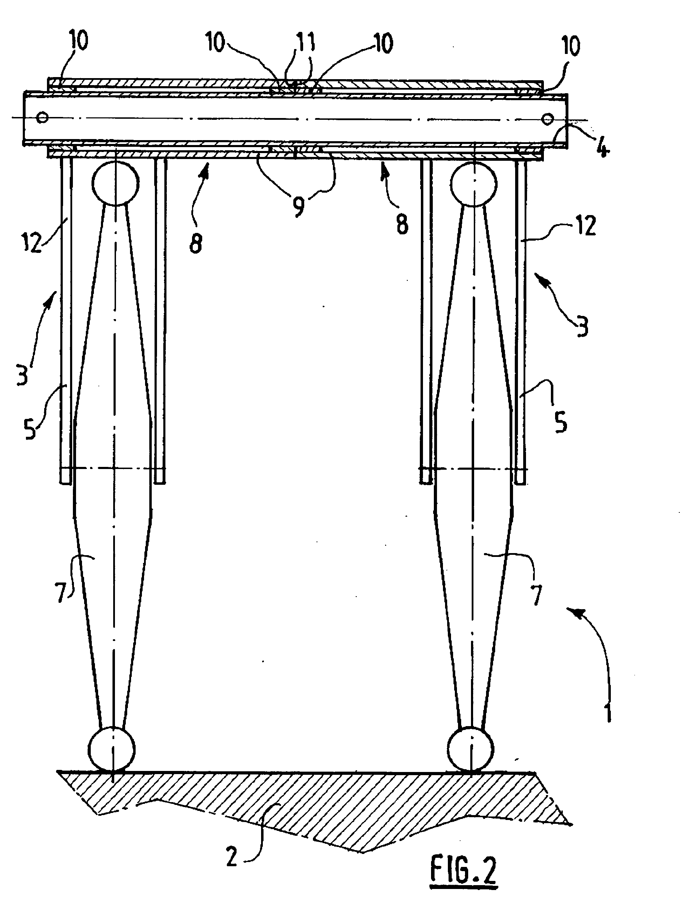

Un chariot d'attelage 1 du type sulky selon le premier mode de réalisation préféré de l'invention, tel que représenté aux figures 1 et 2, comprend une structure se décomposant schématiquement en deux ensembles 3, reliés par un axe 4 fixe réalisé sous la forme d'un tube, et comportant chacun un brancard 6 et un étrier 5 équipé d'une roue 7.

Chaque ensemble 3 comprend un manchon 8 en forme de L monté pivotant autour de l'axe 4. Les deux manchons 8 sont disposés autour de l'axe 4 et constituent avec ce dernier un pont central. Plus précisément, chaque manchon 8 se décompose, d'une part, en un premier tronçon 9 de plus grande longueur emmanché autour de l'axe 4, maintenu en position grâce à des bagues de maintien et de stabilisation 10, et présentant une extrémité 11 libre en partie centrale du pont central, et d'autre part, en un second tronçon 12 de plus petite longueur, perpendiculaire au premier tronçon 9, et présentant une extrémité faisant office d'étrier 5 pour le maintien de la roue 7 correspondante.

Le premier tronçon 9 de chaque manchon 8 est prolongé par une patte 14 dirigée vers l'avant, perpendiculaire à l'axe 4, et dans laquelle est fixée par vissage une première extrémité 15 de l'un des brancards 6. Ce dernier présente une seconde extrémité 16 destinée à être rattachée à un élément d'harnachement (non représenté) équipant un cheval.

Par ailleurs, un siège 17 est fixé dans la structure et est destiné à supporter le conducteur, en l'espèce un jockey.

Ce chariot d'attelage 1 est particulièrement avantageux dans la mesure où chaque ensemble 3 peut s'adapter au relief du sol 2 auquel la roue 7 correspondante est confrontée, et ceci indépendamment du comportement de l'autre ensemble 3. En effet, dans le cas où la roue 7 d'un ensemble 3 serait forcée au cours de son roulement à franchir un creux ou à surmonter un monticule du type motte de terre ou caillou, le manchon 8 associé serait alors amené à pivoter autour de l'axe 4 lors du contact de la roue 7 avec ce relief, assurant ainsi une correcte suspension de cette roue 7, sans interférence aucune avec le manchon 8 de l'autre ensemble 3.

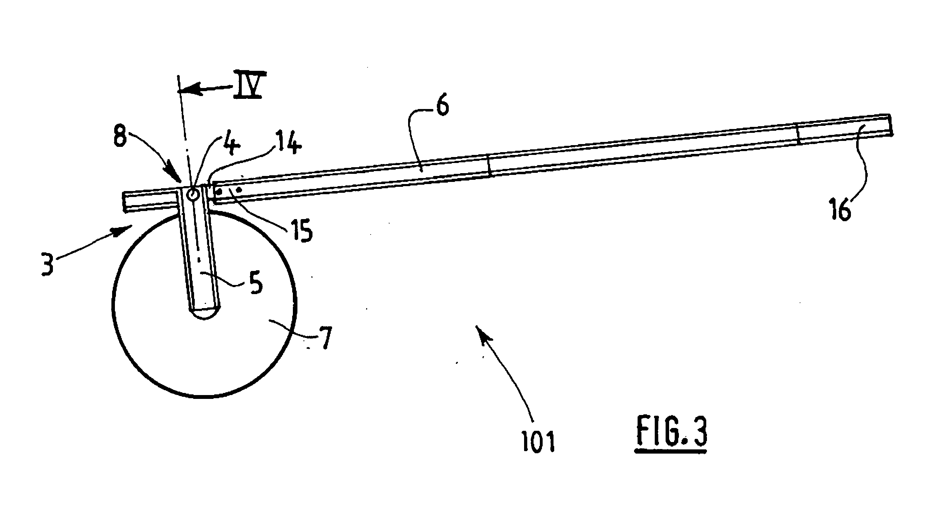

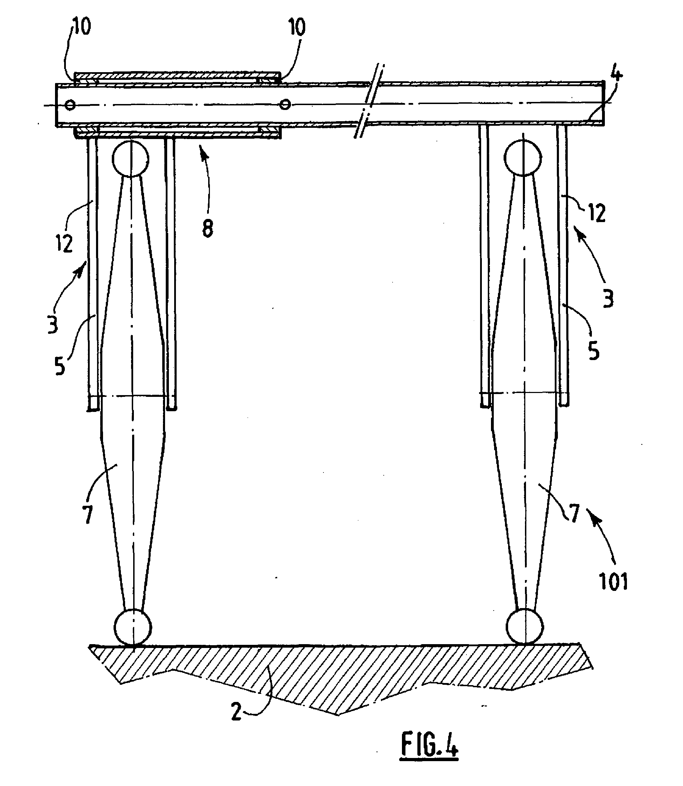

Le chariot d'attelage 101 selon le second mode de réalisation préféré de l'invention, tel que représenté aux figures 3 et 4, diffère du chariot d'attelage 1 par le fait que seul un ensemble 3 est équipé d'un manchon 8 tel que décrit précédemment, l'autre ensemble 3 étant rendu solidaire de l'axe 4.

Par conséquent, en fonction des obstacles rencontrés, le manchon 8 pourra être amené à pivoter autour de l'axe 4, et/ou ce dernier pourra être amené à pivoter dans le manchon 8.

Bien que l'invention ait été décrite en liaison avec des exemples particuliers de réalisation, il est bien évident qu'elle n'y est nullement limitée et qu'elle comprend tous les équivalents techniques des moyens décrits ainsi que leurs combinaisons si celles-ci entrent dans le cadre de l'invention telle que définie par les revendications ci-jointes.

## Revendications

1. Chariot d'attelage (1 ; 101) du type sulky comportant une structure comprenant deux ensembles (3) reliés par un axe (4) et se décomposant chacun en un étrier (5) et en un brancard (6) solidaires l'un de l'autre, ledit étrier étant conçu pour supporter une roue (7) et ledit brancard étant destiné à être relié à un élément d'harnachement d'un animal, **caractérisé en ce que** les deux ensembles sont conçus de manière à être indépendants l'un de l'autre en rotation autour de l'axe.

2. Chariot d'attelage (1) selon la revendication 1, **caractérisé en ce que** chacun des deux ensembles (3) est monté oscillant autour de l'axe (4).

3. Chariot d'attelage (1) selon la revendication 1, **caractérisé en ce qu'**un ensemble (3) est monté oscillant autour de l'axe (4), et **en ce que** l'autre ensemble (3) est solidaire de l'axe.

4. Chariot d'attelage (1 ; 101) selon l'une quelconque des revendications 1 à 3, **caractérisé en ce que** l'axe (4) est réalisé sous la forme d'un tube.

5. Chariot d'attelage (1 ; 101) selon la revendication 1, **caractérisé en ce que** l'un des deux ensembles (3) au moins comprend un manchon (8) monté pivotant autour de l'axe (4).

6. Chariot d'attelage (1) selon la revendication 5, **caractérisé en ce que** chacun des deux ensembles (3) comprend un manchon (8) distinct monté pivotant autour de l'axe (4).

7. Chariot d'attelage (1) selon la revendication 6, **caractérisé en ce que** le manchon (8) a sensiblement la forme d'un L.

8. Chariot d'attelage (101) selon la revendication 5, **caractérisé en ce qu'**un ensemble (3) comprend un manchon (8) monté pivotant autour de l'axe (4), et **en ce que** l'autre ensemble (3) est solidaire de l'axe.

9. Chariot d'attelage (1 ; 101) selon la revendication 5, **caractérisé en ce que** le manchon (8) est équipé de bagues de maintien et de stabilisation (10).

## Claims

1. Trolley coupling (1; 101) of the sulky type with a structure comprising two sets (3) connected by an axle (4) and disjointing each into a bracket (5) and into a side rail (6) secured to each other, the said bracket being designed for supporting a wheel (7) and the said side rail being intended to be connected to a harnessing component of an animal, **characterized in that** both sets are designed so as to be independent from each other on rotation about the axle.

2. Trolley coupling (1) according to Claim 1, **characterised in that** each one of the two sets (3) is mounted oscillating about the axle (4).

3. Trolley coupling (1) according to Claim 1, **characterised in that** a set (3) is mounted oscillating about the axle (4), and **in that** the other set (3) is secured to the axle.

4. Trolley coupling (1; 101) according to any of the Claims 1 to 3, **characterized in that** the axle (4) is made in the shape of a pipe.

5. Trolley coupling (1; 101) according to Claim 1, **characterized in that** one of the two sets (3) at least comprises a sleeve (8) mounted pivoting about the axle (4).

6. Trolley coupling (1) according to Claim 5, **characterized in that** each one of the two sets (3) comprises a separate sleeve (8) mounted pivoting about the axle (4).

7. Trolley coupling (1) according to Claim 6, **characterized in that** the sleeve (8) has substantially the shape of an **L**.

8. Trolley coupling (101) according to Claim 5, **characterized in that** a set (3) comprises a sleeve (8) mounted pivoting about the axle (4), and **in that** the other set (3) is secured to the axle.

9. Trolley coupling (1; 101) according to Claim 5, **characterized in that** the sleeve (8) is equipped with holding and stabilising rings (10).

## Patentansprüche

1. Anhänger (1; 101) vom Typ Sulky, der eine Struktur umfasst, die zwei Gruppen (3) umfasst, die durch eine Achse (4) verbunden sind und jeweils aus einem Bügel (5) und einer Deichselstange (6) zusammengesetzt sind, die miteinander verbunden sind, wobei der Bügel ausgebildet ist, um ein Rad (7) abzustützen und die Deichselstange dazu bestimmt ist, mit einem Anschirrelement eines Tiers verbunden zu sein, **dadurch gekennzeichnet, dass** die zwei Gruppen derart ausgebildet sind, dass sie um die Achse unabhängig voneinander rotieren.

2. Anhänger (1) nach Anspruch 1, **dadurch gekennzeichnet, dass** jede der zwei Gruppen (3) um die Achse (4) drehend montiert ist.

3. Anhänger (1) nach Anspruch 1, **dadurch gekennzeichnet, dass** eine Gruppe (3) um die Achse (4) drehend montiert ist und dass die andere Gruppe (3) mit der Achse verbunden ist.

4. Anhänger (1; 101) nach einem der Ansprüche 1 bis 3, **dadurch gekennzeichnet, dass** die Achse (4) in Form eines Rohrs ausgebildet ist.

5. Anhänger (1; 101) nach Anspruch 1, **dadurch gekennzeichnet, dass** mindestens eine der zwei Gruppen (3) eine um die Achse (4) drehend montierte Hülse (8) umfasst.

6. Anhänger (1) nach Anspruch 5, **dadurch gekennzeichnet, dass** jede der zwei Gruppen (3) eine unterschiedliche um die Achse (4) drehend montierte Hülse (8) umfasst.

7. Anhänger (1) nach Anspruch 6, **dadurch gekennzeichnet, dass** die Hülse (8) etwa eine L-Form hat.

8. Anhänger (101) nach Anspruch 5, **dadurch gekennzeichnet, dass** eine Gruppe (3) eine um die Achse (4) drehend montierte Hülse (8) umfasst und dass die andere Gruppe (3) mit der Achse verbunden ist.

9. Anhänger (1 ; 101) nach Anspruch 5, **dadurch gekennzeichnet, dass** die Hülse (8) mit Halte- und Stabilisierungsringen (10) ausgestattet ist.
